# EUROPEAN PATENT SPECIFICATION

(11) **EP 0 565 947 B1**
(45) Date of publication and mention of the grant of the patent: **28.05.1997**
(21) Application number: 93105323.5
(22) Date of filing: 31.03.1993
(51) Int. Cl.: H04B 14/04

(54) **Procedure for including digital information in an audio signal prior to channel coding**
Verfahren zum Einfügen digitaler Daten in ein Audiosignal vor der Kanalkodierung
Méthode pour inclusion d'information digitale dans un signal audio avant decoder le canal

(30) Priority: 13.04.1992 FI 921644
(43) Date of publication of application: 20.10.1993
(73) Proprietor: NOKIA TECHNOLOGY GmbH, 75175 Pforzheim (DE)
(72) Inventor: Kuusama, Juha, SF-33720 Tampere (FI)

(56) References cited:
- EP-A- 0 137 855
- EP-A- 0 167 364
- WO-A-89/10661
- US-A- 5 136 586

## Description

The present invention relates to a method with which data information can be added in an audio signal present in digital form so that after the channel coding of an audio signal accomplished in a transmitter and the coding of an audio signal accomplished in a receiver no information is lost.

In a conference proceedings paper Proc. ICASSP 90, Alberquerque, New Mexico, April 3-6, 1990, p. 1097-1100, W.ten Kate, L. van de Kerkhof and F. Ziderveld: Digital Audio Carrying Extra Information, a encoding method is described with which a four-channel audio signal can be encoded to be appropriate for use in a transmission path of a two-channel audio signal. In said encoding method two characteristic features of the human hearing sense are made use of: hearing threshold and masking effect. The masking effect means that in any audio signal another, less powerful signal can be added, which is not audible to the ear because of the masking effect. The masking effect is a psychoacoustic phenomenon in which the hearing threshold moves upwards when other sounds are present. The masking effect is most successful in sounds in which the spectrum components are in the proximity of the components of the masking sound. The frequency masking declines more rapidly when moving to lower sounds. This is true also in the time plane: the masking effect is greatest in sounds which are simultaneously audible. The dependence of the masking effect on time and frequency is well known in simple signals. The existence of masking effect can be utilized in that signals below the hearing threshold can be added into an audio signal. In principle, this takes place so that an analogous audio signal is sampled and in the place of the bits of the samples not audible to the human ear other information is placed. Thus, information is inserted in place of the less significant bits of the sample in digital form. When such a signal is repeated, the human ear is not at all able to hear the signal added therein because the actual signal intended to be heard masks it. It is the masking ability of the human ear which determines how many less significant bits can be substituted without still being audible. A signal thus added can be used for various purposes. Similarly, when a sound signal is compressed, the signals below the hearing threshold can be excluded from storage, or only the signals audible to the human ear are transmitted.

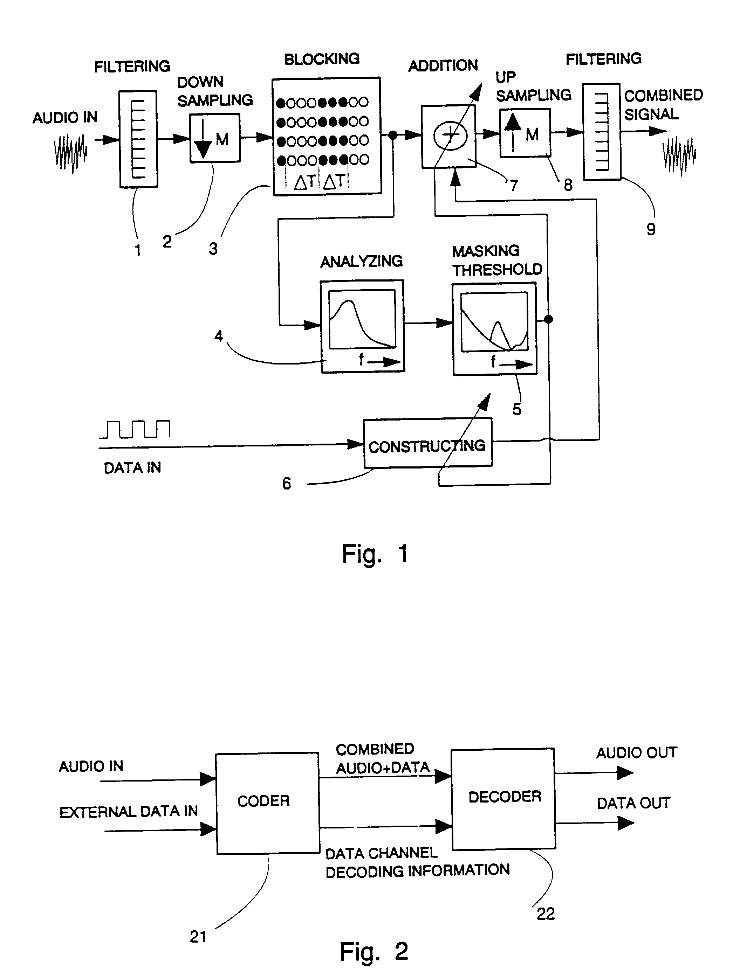

The principle of said known coding method utilizing the masking effect is presented in Fig. 1. An incoming audio signal is sampled and divided first in a filter bank 1 into a great number of subbands and the signal samples of the subbands are decimated in means 2. The subbands are preferably equal in size so that the sampling frequency meeting the Nyqvist criterion in the decimalizing means 2 of each subband is equal. The samples of each subband are then grouped into subsequent time windows in means 3. The length of a time window is Δ t and it includes samples of one and same point of time from each subband. So, the simultaneous time windows of each subband constitute one block. A power spectrum is calculated for each block in spectrum analysis means 4 and from the spectrum thus derived a masking threshold is determined for each block in means 5. After determining the masking threshold it is clear what the maximum signal power is which can be added in an audio signal of a subband in said time window. DATA IN bits of the data signal are added below the masking threshold calculated for the audio signal. It is carried out so that a given number of subsequent bits of a data flow, e.g. three subsequent bits, form one word. Each word is interpreted to be an address representing a given sample value; thus, in a three bit case there are eight pieces of sample values. Selection of a word and the sample value corresponding thereto is carried out in means 6. The sample values are grouped for appropriate sample windows of the subbands corresponding to the equivalence of the sample value and the threshold of the sample window of a subband, and data bits are substituted for bits of the audio signal samples of a subband in an adder 7. After the substitution, the sample frequency of the signals of the subbands is increased in means 2, and the signals are again connected in the filter bank 9 into a wide-band audio signal which to a listener sounds totally similar to the original audio signal although data information has been added therein. The reception is in principle a reverse incident to the transmission. A typical feature in this method of prior art is that a hearing threshold benefitting the masking effect has to be calculated both in the encoder of the transmitter and in the decoder of the receiver by using a mask modelling model of the human hearing system (i.e. Psycho Acoustic Model). Thus, the encoder and the coder act independent of one another. This results in certain problems.

In the Finnish patent application No. 915114, filing date October 30, 1991, corresponding to EP-A-0 540 330, published 05 May 1993, said application being included as reference in the present application, the information produced by the encoder of the above described system is made use of. Such information includes information concerning data mode, information related to quantisation, and information related to dematrixing. Said information is transmitted on a separate side channel at the same time as the audio signals to a receiver, which controlled by side channel information is enabled to process the two-channel audio signal received and to convert it e.g. into a multichannel audio signal. Thus, the coder of the receiver acts controlled by the transmitter encoder, i.e. as a slave decoder. An audio signal transmitted on a stereo channel and the information data hidden therein are therefore separated using the control information transmitted by the encoder and received on a separate channel.

The principle of the Finnish patent application is shown in Fig. 2. A coding block therein is indicated by reference numeral 31, said block being in essential elements similar to the prior art encoding block shown in Fig. 1. The encoder combines an incoming multichannel audio signal into a combined stereo signal "hiding" a data signal therein by making use of the masking effect. Information about the data mode, quantization and matrixing are received from the encoder. The data mode describes the special arrangements needed for maximizing the transmission capacity of the hidden data. Such arrangements are e.g. information about that certain channels contain no signals compared with the state of the rest of the channels, so that after being coded said channels are attenuatable. On the whole, the mode contains the way of processing the special instances concerning signal coding when these are not included in normal mix-up. The quantization data informs of the quantization steps of the masking signal and the signal to be masked (hidden), and the number of bits as well as the masking threshold calculated for the time intervals of each subband in the manner described above. The matrixing information yields information about how the original multichannel audio signal was downmixed. In brief, all the information required in carrying out the coding can be achieved from the encoder. The combined stereosignal derived from the encoder, in which data has been "hidden", is adapted for the audio signal to be used on a radio path to be transmitted to e.g. the NICAM format. The above information required in coding is transmitted simultaneously on a separate low-speed digital channel. If the data hidden in the audio channel cannot at a point of time be included in the audio channel, because the "masking capacity" of the audio signal does not suffice, said data can be transmitted on said separate data channel, the information transmitted whereon can be called side information because it is transmitted on the side of the actual audio channel.

The coder 32 in the receiver receives the signal of the audio channel and the side information of the data channel, so that controlled by the coding information transmitted therein it is enabled to code the signal of the audio channel and to separate the data hidden therein. Controlled by the matrixing information it is further enabled to form e.g. a multichannel audio signal.

The method of said Finnish patent application is in principle well appropriate for use in transmitting an audio signal containing hidden data on a transmission path, one of its application being the sound transmission of any HDTV system. In transmitting an audio signal digitally through the radio, it must first be encoded to be appropriate for a transmission channel. There are a great number of channel-coding systems available using compressing; the NICAM system may be mentioned here as an example thereof, as it is already in use and as it may become the audio transmission system in the European HDTV system. When the above-described method is applied in the audio signal, which is channel-coded thereafter using any existing method, this raises a difficult problem in practice: the received coded audio signal is not precisely the same as the audio signal of the transmission head prior to channel-coding. This is due to the fact that independent on the system, the channel-coding causes errors. Most often, one or two of the least significant bits may become converted in the encoder, so that the coded bit stream is almost, but not precisely, the same as the bit stream prior to the encoding. Consequently, if an audio signal is used as such in a transmitter as a signal masking some data to be hidden, it would lead either to a significant increase in error rate of the bits being transmitted or to a significant drop in the hiding capacity because the data is hidden specifically by substituting the least significant bits.

According to the invention, this problem can be solved using the characteristic feature of the method disclosed in the Finnish patent application No. 915114, said feature meaning a separate side information channel containing information formation for controlling the encoder. Since not only on the amount of the data to be used is transmitted on said side channel, as suggested in the application, but also precise information on the location of said data samples, an immaculate original data signal can be provided with the aid of said information. Knowledge of the location of the data samples prerequires information about which of the least significant bits of the audio signal can be substituted for data information, that is, which of the bits are sure to pass through the channel-coder without being changed.

This information is described according to claim 1.

The insight of the invention lies in that an original audio signal is separated into two branches, in the first of which the signal is first channel-coded and immediately thereafter it is decoded. In the second branch the signal is delayed as long as in the first branch the signal is encoded and coded. In this step such signals are resulted which almost resemble one another: in the signal of the first branch the encoding/decoding operation caused a few bit errors. Thereafter, the audio signals of both branches are divided into a plurality of subbands in the filter bank and the signal samples of the subbands are decimated. The subbands have to be equal in size. In each branch the samples of every subband are then grouped into subsequent time windows. The length of one time window is Δ T and it includes samples of the same point of time from each subband. The simultaneous time windows of each subband thus form each time one block. Now, the equivalent samples of the subbands of each branch block are mutually comparable. If all bits are the same it is known that said bits have not been affected by the channel-coding. If, instead, e.g. the lowest, i.e. the least significant bit of the sample of the encoding/coding branch differs from the lowest bit of the sample of the non-encoded branch, while the rest of the bits are equal, said lowest bit is known to be a bit not expected to outlast the channel-coding operation, so that a data bit is not substituted therefor. Part of the other bits can be replaced by data bits because they are known to outlive in channel coding. This is the method which is used for all subbands. The masking threshold is then calculated for the audio signal and the data to be hidden is added in place of the bits of the audio signal which are known to outlive. The information about which of the bits in each sample have been substituted is included in the side channel information SI, on the basis of which the receiver is able to reconstruct the correct hidden information precisely.

An implementation of the invention is described below, reference being made to the accompanying schematic figures, in which:
- Fig. 1: presents an encoder used in the method of prior art,
- Fig. 2: shows the coder as disclosed in the Finnish appliation No. FI-915114, and
- Fig. 3: shows principally the procedure of the invention.

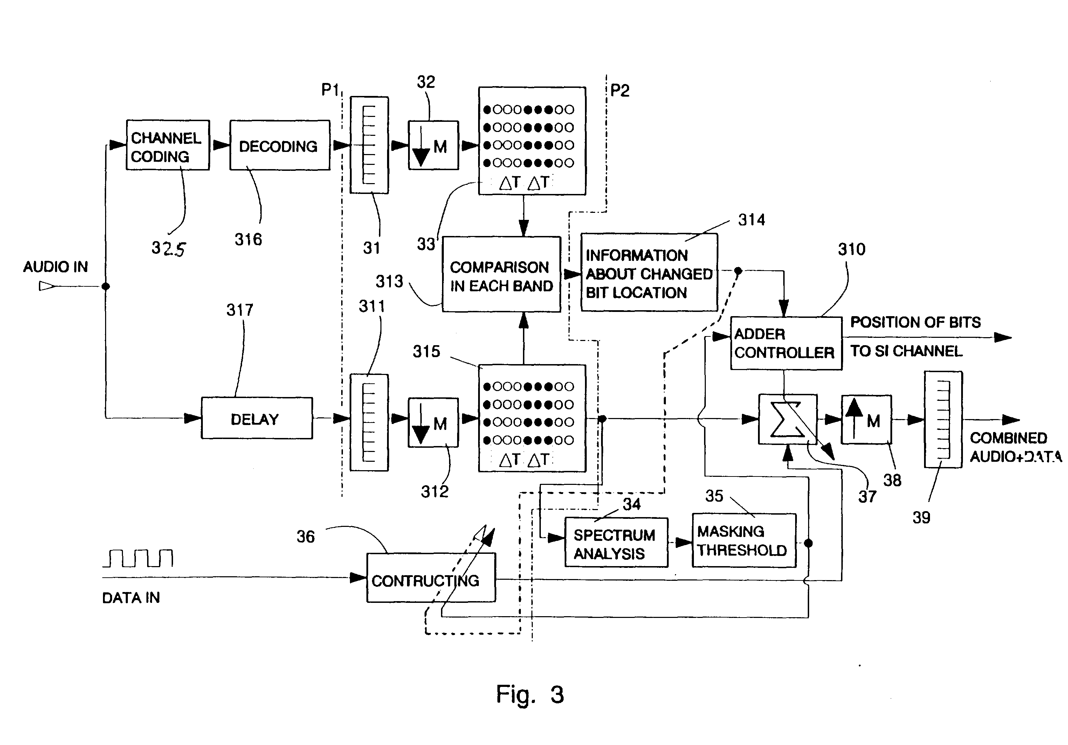

The procedures shown in Figs 1 and 2 are already described above. The principle of the method according to the invention is presented in Fig. 3. A digital audio signal AUDIO IN, within which DATA IN data information has been hidden utilizing the masking effect, is separated into two branches. In the upper branch the audio signal is channel-coded in an encoder 325 using the same coding method as used in the actual transmission path, for instance in the NICAM coding. An audio signal channel-coded immediately thereafter is coded in a coder 316, whereby it should result in the original audio signal. The audio signal AUDIO IN is at the same time conducted also into the lower branch in which it is delayed in a delay means 317 precisely the time which passes for the encoding and coding in the upper branch. In the interface, marked with P₁, the audio signals are not, however, bit by bit the same, owing to errors caused by the encoder 325 and decoder 316. The defective bits are found by dividing the audio signal in the filter banks 31 and 311, after the interface P₁, into a plurality of subbands, and the signal samples of the subbands are decimated in means 32 and 312. Said subbands are preferably equal in size. The samples of each subband are thereafter grouped into subsequent time windows in means 33 and 315. The lengths Δ T of the time window are the same and they include the same amount of samples of one and same point of time from each subband. Thus the simultaneous time windows of each subband always form one block. So, at one point of time, the signal samples of both the branch of the coded audio signal and of the branch of the delayed audio signal are known, grouped according to their frequency bands. The samples of one point of time are then compared in a comparator 313 so that a sample of one subband of means 33 is compared with a sample of the correspondent subband of means 315. If the encoding / coding process has changed any of the bits, the comparison reveals which of the bits were changed. For instance, if the lowest, i.e. the least significant bit in a sample of block 33 is different from the one in the sample of block 315, it is known that no data bit should be placed in the place of said bit because it will in any case be lost in the course of channel-coding. After the interface marked with P₂ it was thus found out which of the bits of the audio signal should not be substituted for by data bits. The essential core of the invention lies precisely in this fact, and the information obtained thereafter can be applied in an encoder complying with the Finnish application No. 915114. The mode of operation is described below in outline.

A spectrum analysis is accomplished in a manner known in the art in the lower branch in means 34 and the calculation of the masking threshold in means 35. After finding out how many of the bits of the audio signal can be substituted for by data bits and which of the bits in the audio signal do not outlive the channel-coding, only the bits below the masking threshold can be substituted in an adder 310 which outlive in the channel coding. On the basis of the masking threshold information by block 35 and the information provided by reference block 313, the data to be hidden is arranged to be appropriate in an arrangement block 36.

The information divulged in reference means 313 is conveyed to the adder 310. For instance, if the spectrum analysis and the calculation of the masking threshold indicate that data bits could be substituted for three bits in a sample, without being audible to the human ear, and if it has been analysed in reference means 313 from the same sample that the first bit will perish in the channel-coding process, only the two bits of the sample are substituted for by data bits which were learnt to outlive the channel coding. The information on the point of a sample of an audio signal at which some data has been hidden, i.e. which of the bits have been substituted for by data bits, is transmitted as side information on a SI channel. On the basis of said information and other information transmitted on the side channel, the receiver is enabled to discover in the audio signal a data signal hidden therein.

All audio samples are analysed similarly in each subband, regarding the duration of the channel coding, and only those bits below the masking threshold are substituted which are sure to outlive the channel-coding. After summing up, the sample frequency of the signals of the subbands is increased in means 38 and the signals are recombined in filter bank 38 into a wideband audio signal which after being channel-coded in the transmitter and decoded in the receiver sound to the listener's ear the same as the original audio signal irrespective of the fact that data information has been added therein and that the data information is received without any deficiencies. A low-speed side channel SI is produced in the manner disclosed in Finnish application No. 915114, included therein an addition that now also information about the location of the bits hidden therein is added therein.

The main features of the method are described above. It is obvious that a practical implementation can be accomplished in a number of ways while remaining within the protective scope of the claims. The method is particularly appropriate for use in association with the method disclosed in Finnish patent application No. 915114 because the side channel disclosed therein is particularly well appropriate for mediating the information about the location of the substituted bits to the receiver.

## Claims

1. A method for combining a data signal with an audio signal prior to channel-coding the combined signal, in which
- an audio signal entering in sample sequence mode is conducted to a first branch and divided into subbands, whereby in each subband an array of audio signal samples of equal size is obtained in one and the same time window,
- a masking threshold is calculated simultaneously for said sample array in each subband, the sounds wherebelow being unaudible to the human ear,
- the bits of the data signal are substituted for the bits of the samples of the sample arrays remaining below the masking threshold,
- the subbands are combined, whereby a combined signal to be transmitted on an audio channel is obtained, and
- all the information is gathered that is needed in re-separating the combined signal, and said information is transmitted in the form of side information on a separate data channel at the same time with the combined signal,
whereby
- an audio signal is conducted also to a second branch in which it is channel-coded and decoded, and thereafter it is divided into as many subbands as in the first branch, whereby in each subband an array of audio signal samples of equal magnitude is obtained in the same time window as in the first branch,
- the audio signal conducted into the first branch is delayed for a time equivalent to the time required for channel-coding and decoding,
- the audio signal samples of one and same point of time of the corresponding subbands of each branch are compared,
- only the bits of the samples of the first branch are substituted for by data bits which are the same as in the second branch, and
- information on the location of the substituting data bits in the sample is transmitted in the form of side information on said data channel.

2. Method for separating an audio signal and a data signal combined in the manner disclosed in claim 1 in a receiver in which a signal entering in sample sequence mode is coded, divided into subbands, and the bits are separated from the combined signal which remain below the masking threshold, and the separated bits are combined, whereby the receiver receives in the form of side information on a separate data channel such information which is needed for separating the data signal from the audio signal, whereby the decoder accomplishes said separation controlled by the coder, characterized in that the side information also includes information about which of the bits in the audio sample have been substituted for by data bits.

3. An apparatus for combining a data signal with an audio signal before channel-coding the combined signal in the transmitter, said apparatus comprising:
- a first filter means (311) for dividing an audio signal entering in the form of sample sequence mode into subbands,
- a grouping means (315) to group in each subband an array of audio signal samples of the same size in one and same time window,
- an analysing and calculating means (34,35), simultaneously calculating in each subband a masking threshold for a sample group, the sounds below which the human ear is not able to hear,
- a substituting means (37) in which the bits of a data signal are substituted for the bits of the samples of the sample groups which remain below the masking threshold,
- a second filter means (39) to combine the subbands, whereby a combined signal to be transmitted on an audio channel is obtained,
- a data channel control means to gather all the information needed for reseparating the combined signal, which information is transmitted as side information on the data channel simultaneously with the combined signal,
whereby the apparatus comprises further
- a parallel branch to which the audio signal is also conducted, while the branch comprises in succession a channel-coder (325) and a decoder (316), a third filter means (31) to divide the output signal of the encoder into as many subbands as the first filter means (311), a second grouping means (33) to group within each subband an equal number of audiosignal samples in one time window, whereby in said subband an equal number of audiosignal samples are obtained in one and the same time window as in the first branch,
- a delay means (317) to delay the audio signal entering the first filter means (311) for a period of time which corresponds to the delay of the channel coder (315) and the decoder (316),
- a comparator means (313) which compares the same-moment audio signal samples of the corresponding subbands of the first (315) and the second grouping means (33) with one another, whereby the substituting means substitutes with data bits only for the bits of the samples of the first grouping means (315) which are the same as those in the samples of the second grouping means (33), and the comparator (313, 314) informs the control means of the side channel of the location of the substituting data bits in the sample.

## Patentansprüche

1. Verfahren zum Kombinieren eines Datensignals mit einem Tonsignal vor der Kanalcodierung des kombinierten Signals, bei dem
- ein im Abtastsequenzmodus eingehendes Tonsignal zu einer ersten Verzweigung geleitet und in Teilbänder unterteilt wird, so daß in jedem Teilband eine Reihe von Tonsignalproben gleicher Größe in ein und demselben Zeitfenster erhalten wird,
- für die genannte Probenreihe gleichzeitig in jedem Teilband eine Maskierungsschwelle errechnet wird, unterhalb derer die Töne für das menschliche Ohr unhörbar sind,
- die Bits des Datensignals durch die Bits der Proben der unter der Maskierungsschwelle verbleibenden Probenreihen substituiert werden,
- die Teilbänder kombiniert werden, so daß ein auf einem Tonkanal zu übertragendes kombiniertes Signal erhalten wird, und
- alle Informationen gesammelt werden, die beim erneuten Trennen des kombinierten Signals benötigt werden, und diese Informationen in der Form von Nebeninformationen auf einem separaten Datenkanal gleichzeitig mit dem kombinierten Signal übertragen werden, wobei
- ein Tonsignal auch zu einer zweiten Verzweigung geleitet wird, in der es kanalcodiert und -decodiert und danach in ebenso viele Teilbänder wie in der ersten Verzweigung unterteilt wird, so daß in jedem Teilband eine Reihe von Tonsignalproben gleicher Größe in demselben Zeitfenster erhalten wird wie in der ersten Verzweigung,
- das in die erste Verzweigung geleitete Tonsignal für eine Zeit verzögert wird, die gleich der Zeit ist, die zur Kanalcodierung und -decodierung erforderlich ist,
- die Tonsignalproben von ein und demselben Zeitpunkt der entsprechenden Teilbänder jeder Verzweigung verglichen werden,
- nur diejenigen Bits der Proben der ersten Verzweigung durch Datenbits substituiert werden, die dieselben sind wie in der zweiten Verzweigung, und
- Informationen über den Ort der Substitution von Datenbits in der Probe in der Form von Nebeninformationen über den genannten Datenkanal übertragen werden.

2. Verfahren zum Trennen eines Tonsignals und eines in der in Anspruch 1 offenbarten Weise kombinierten Datensignals in einem Empfänger, in dem ein im Abtastsequenzmodus eingehendes Signal codiert und in Teilbänder unterteilt wird und diejenigen Bits von dem kombinierten Signal getrennt werden, die unterhalb der Maskierungsschwelle bleiben, und die getrennten Bits kombiniert werden, so daß der Empfänger in der Form von Nebeninformationen auf einem separaten Datenkanal solche Informationen erhält, die zum Trennen des Datensignals von dem Tonsignal erforderlich sind, so daß der Decoder die genannte Trennung durch den Codierer gesteuert durchführt, dadurch gekennzeichnet, daß die Nebeninformationen auch Informationen darüber enthalten, welche der Bits in der Tonprobe durch Datenbits substituiert wurden.

3. Vorrichtung zum Kombinieren eines Datensignals mit einem Tonsignal vor der Kanalcodierung des kombinierten Signals in dem Sender, wobei die genannte Vorrichtung folgendes umfaßt:
- einen ersten Filter (311) zum Unterteilen eines im Abtastsequenzmodus eingehenden Tonsignals in Teilbänder,
- ein Gruppierungsmittel (315), um in jedem Teilband eine Reihe von Tonssignalproben derselben Größe in ein und demselben Zeitfenster zu gruppieren,
- ein Analyse- und Berechnungsmittel (34, 35), das gleichzeitig in jedem Teilband eine Maskierungsschwelle für eine Probengruppe errechnet, unterhalb derer der Ton für das menschliche Ohr nicht hörbar ist,
- ein Substitutionsmittel (37), bei dem die Bits eines Datensignals durch Bits der Proben der Probengruppen substituiert werden, die unterhalb der Maskierungsschwelle bleiben,
- einen zweiten Filter (39) zum Kombinieren der Teilbänder, so daß ein auf einem Tonkanal zu übertragendes kombiniertes Signal erhalten wird,
- ein Datenkanal-Steuermittel zum Sammeln aller Informationen, die für die erneute Trennung des kombinierten Signals benötigt werden, wobei diese Informationen als Nebeninformationen gleichzeitig mit dem kombinierten Signal auf dem Datenkanal übertragen werden, wobei die Vorrichtung ferner folgendes umfaßt:
- eine parallele Verzweigung, auf die das Tonsignal ebenso geleitet wird, während die Verzweigung nacheinander folgendes umfaßt: einen Kanalcodierer (325) und einen Decodierer (316), einen dritten Filter (31) zum Unterteilen des Ausgangssignals des Codierers in ebenso viele Teilbänder wie der erste Filter (311), ein zweites Gruppierungsmittel (33), um innerhalb jedes Teilbandes eine gleiche Zahl von Tonsignalproben in einem Zeitfenster zu gruppieren, so daß in dem genannten Teilband eine gleiche Zahl von Tonsignalproben in ein und demselben Zeitfenster wie in der ersten Verzweigung erhalten werden,
- ein Verzögerungsmittel (317) zum Verzögern des in dem ersten Filter (311) eingehenden Tonsignals für eine Zeitperiode, die der Verzögerung des Kanalcodierers (315) und des Decodierers (316) entspricht,
- einen Komparator (313), der die zeitgleichen Tonsignalproben der entsprechenden Teilbänder des ersten (315) und des zweiten (33) Gruppierungsmittels miteinander vergleicht, so daß das Substituierungsmittel nur diejenigen Bits der Proben des ersten Gruppierungsmittels (315) durch Datenbits substituiert, die dieselben sind wie die in den Proben des zweiten Gruppierungsmittels (33), und der Komparator (313, 314) informiert das Steuermittel des Seitenkanals des Ortes der substituierenden Datenbits in der Probe.

## Revendications

1. Procédé pour combiner un signal de données avec un signal audio avant de coder en canaux le signal combiné, dans lequel
- un signal audio entrant dans un mode séquentiel d'échantillons est amené jusqu'à une première branche et divisé en sous-bandes, moyennant quoi dans chaque sous-bande, un ensemble d'échantillons de signal audio de tailles égales est obtenu dans une seule et même fenêtre temporelle,
- un seuil de masquage est calculé en même temps pour ledit ensemble d'échantillons dans chaque sous-bande, les sons au-dessous de celui-ci étant inaudibles pour l'oreille humaine,
- les bits du signal de données viennent remplacer les bits des échantillons des ensembles d'échantillons restant sous le seuil de masquage,
- les sous-bandes sont combinées, moyennant quoi un signal combiné devant être transmis sur un canal audio est obtenu, et
- toutes les informations sont rassemblées, qui sont nécessaires pour séparer de nouveau le signal combiné, et lesdites informations sont transmises sous la forme d'informations secondaires sur un canal de données séparé au même moment que le signal combiné, moyennant quoi
- un signal audio est également amené jusqu'à une seconde branche dans lequel il est codé en canaux et décodé, et par la suite, il est divisé en autant de sous-bandes que dans la première branche, moyennant quoi, dans chaque sous-bande, un ensemble d'échantillons de signal audio d'amplitudes égales est obtenu dans la même fenêtre temporelle que dans la première branche,
- le signal audio amené dans la première branche est retardé pendant une durée équivalente à celle requise pour coder en canaux et décoder,
- les échantillons de signal audio d'un seul et même instant des sous-bandes correspondantes de chaque branche sont comparés,
- seuls les bits des échantillons de la première branche sont remplacés par des bits de données qui sont les mêmes que dans la seconde branche, et
- les informations sur l'emplacement des bits de données de remplacement dans l'échantillon sont transmises sous la formes d'informations secondaires sur ledit canal de données.

2. Procédé pour séparer un signal audio et un signal de données combinés de la manière décrite dans la revendication 1, dans un récepteur dans lequel un signal entrant dans un mode séquentiel d'échantillcns est codé, divisé en sous-bandes, et les bits sont séparés du signal combiné qui restent au-dessous du seuil de masquage, et les bits séparés sont combinés, moyennant quoi le récepteur reçoit sous la forme d'informations secondaires, sur un canal de données séparé, les informations qui sont nécessaires pour séparer le signal de données du signal audio, moyennant quoi le décodeur réalise ladite séparation commandée par le codeur, caractérisé en ce que les informations secondaires comprennent également des informations au sujet des bits dans l'échantillon audio qui ont été remplacés par les bits de données.

3. Dispositif pour combiner un signal de données avec un signal audio avant de coder en canaux le signal combiné dans l'émetteur, ledit dispositif comprenant :
- des premiers moyens de filtre (311) pour diviser un signal audio entrant sous la forme d'un mode séquentiel d'échantillons en sous-bandes,
- des moyens de groupement (315) pour grouper dans chaque sous-bande un ensemble d'échantillons de signal audio de la même taille, dans une seule et même fenêtre temporelle,
- des moyens d'analyse et de calcul (34, 35), calculant en même temps dans chaque sous-bande un seuil de masquage pour un groupe d'échantillons, l'oreille humaine n'étant pas capable d'entendre les sons au-dessous de celui-ci,
- des moyens de substitution (37) dans lesquels les bits d'un signal de données remplacent les bits des échantillons des groupes d'échantillons qui restent au-dessous du seuil de masquage,
- des deuxièmes moyens de filtre (39) pour combiner les sous-bandes, moyennant quoi un signal combiné devant être transmis sur un canal audio est obtenu,
- des moyens de commande de canal de données pour rassembler toutes les informations nécessaires pour séparer de nouveau le signal combiné, lesquelles informations sont transmises en tant qu'informations secondaires sur le canal de données en même temps que le signal combiné, le dispositif comprenant en outre
- une branche parallèle vers laquelle le signal audio est également amené, tandis que la branche comprend, à la suite, un codeur (325) de canaux et un décodeur (316), des troisièmes moyens de filtre (31) pour diviser le signal de sortie du codeur en autant de sous-bandes que dans les premiers moyens de filtre (311), des seconds moyens de groupement (33) pour grouper à l'intérieur de chaque sous-bande un nombre égal d'échantillons de signal audio dans une fenêtre temporelle, moyennant quoi on obtient dans ladite sous-bande un nombre égal d'échantillons de signal audio dans une seule et même fenêtre temporelle comme dans la première branche,
- des moyens de retardement (317) pour retarder le signal audio entrant dans les premiers moyens de filtre (311) pour une durée qui correspond au retard du codeur (315) et du décodeur (316) de canaux,
- des moyens formant comparateur (313) qui comparent, les uns avec les autres, les échantillons de signal audio, pris au même moment, des sous-bandes correspondantes des premiers (315) et seconds (33) moyens de groupement, moyennant quoi les moyens de remplacement remplacent par des bits de données seulement les bits des échantillons des premiers moyens de groupement (315) qui sont les mêmes que ceux dans les échantillons des seconds moyens de groupement (33), et le comparateur (313, 314) informe les moyens de commande du canal secondaire de l'emplacement des bits de données de remplacement dans l'échantillon.
